# FASCICULE DE BREVET EUROPEEN

(11) **EP 1 728 687 B1**
(45) Date de publication et mention de la délivrance du brevet: **15.07.2009**
(21) Numéro de dépôt: 06300532.6
(22) Date de dépôt: 29.05.2006
(51) Int. Cl.: B60R 13/04

(54) **Agencement pour le montage d'un enjoliveur sur un élément de carrosserie de véhicule automobile**
Anordnung zur Montage einer Zierleiste an einem Kraftfahrzeug Karosserieteil
Arrangement for mounting a decorative element on an automobile body part.

(30) Priorité: 31.05.2005 FR 0551440
(43) Date de publication de la demande: 06.12.2006
(73) Titulaire: RENAULT S.A.S., 92100 Boulogne Billancourt (FR)
(72) Inventeur: Perreux, Philippe, 78620, L'Etang la Ville (FR)

(56) Documents cités:
- DE-A1- 4 102 302
- FR-A- 2 817 302
- US-A1- 2002 011 040
- PATENT ABSTRACTS OF JAPAN vol. 1999, no. 02, 26 février 1999 (1999-02-26) & JP 10 297387 A (MITSUBISHI MOTORS CORP; NIFCO INC), 10 novembre 1998 (1998-11-10)
- PATENT ABSTRACTS OF JAPAN vol. 1999, no. 03, 31 mars 1999 (1999-03-31) & JP 10 315879 A (TOGO SEISAKUSHO CORP; MITSUBISHI MOTORS CORP), 2 décembre 1998 (1998-12-02)

## Description

L'invention concorne un agencement pour le montage d'un enjoliveur sur un élément de carrosserie de véhicule automobile au moyen d'au moins une agrafe.

Il est nécessaire d'une part de prévoir un montage facile et rapide de l'enjoliveur mais d'autre part il est aussi important que l'enjoliveur ait une bonne tenue sur la pièce de carrosserie. Cependant il faut aussi qu'il existe une possibilité d'ôter l'enjoliveur on cas de réparation, par exemple. De plus, la fixation de l'enjoliveur doit également permettre de limiter les dispersions sur la caisse du véhicule. En outre, les fixations d'enjoliveurs sont sournises à des efforts importants dans des espaces réduits.

Les solutions habituellement utilisées sont des vis ou des agrafes de fixation.

Ainsi, il est connu par la publication US-A-2002/0011040 un agencement d'un enjoliveur destiné à équiper un pare-brise de véhicule automobile dans lequel l'enjoliveur est relié à un élément de carrosserie du véhicule par l'intermédiaire d'une agrafe en forme de U, ladite agrafe étant d'une part fixée sur l'élément de carrosserie par un adhésif, par vissage ou bien par soudage et étant d'autre part reliée à l'enjoliveur par l'intermédiaire d'un tenon. L'enjoliveur comporte aussi une Iévre qui est en appui sur une vitre. Cependant le montage de l'enjoliveur par ce moyen est compliqué. De plus, il est précisé dans ce document que le démontage de l'enjoliveur est extrèmement difficile, ce qui risque de compliquer fortement les interventions en après-vente, par exemple.

La publication FR 2817302 divulgue également un clip de fixation d'un accessoire sur un véhicule, tel qu'une grille d'auvent, comprenant un clip élastique de fixation susceptible de se fixer sur la structure du véhicule ainsi qu'un clip de retenue dudit accessoire. Ce dernier est composé de deux branches, l'une fixée à la carrosserie, et l'autre mobile élastiquement de façon à retenir une butée de l'accessoire sous l'ergot situé à son extrémité.

Afin de pallier ces inconvénients, l'invention a pour objet un agencement pour le montage d'un enjoliveur sur un élément de carrosserie permettant à la fois un montage aisé et une bonne tenue de la pièce, et ce, tout en autorisant le démontage de la pièce.

L'invention a aussi pour objet un agencement pour le montage d'un enjoliveur permettant de s'affranchir des dispersions sur la caisse.

A cet effet, l'invention propose un agencement pour le montage d'un enjoliveur du type cité ci-dessus, caractérisé en ce que l'agrafe comporte une patte latérale élastique s'étendant depuis une paroi longitudinale de l'agrafe en direction d'une paroi interne de l'enjoliveur, ladite patte latérale pouvant fléchir autour d'un axe de flexion parallèle à un axe longitudinal de l'enjoliveur et perpendiculaire à la normale au plan de la paroi interne de l'enjoliveur et présentant un bossage de façon que la patte latérale soit apte à coopérer avec un épaulement d'un tenon de la paroi interne de l'enjoliveur, et en ce que l'agrafe cornports, à chacune de ses extrémités, une patte élastique d'extrémité pouvant fléchir autour d'un axe de flexion perpendiculaire à l'axe longitudinal et à la normale à la paroi interne de l'enjoliveur, de manière que la patte d'extrémité soit apte à coopérer avec un bord de retenue d'un orifice de l'élément de carrosserie.

Selon d'autres caractéristiques de l'invention;
- Lors du montage de l'agrafe sur l'enjoliveur, la patte latérale fléchit et le bossage de la patte latérale glisse le long de la face du tenon tandis que la paroi longitudinale de l'agrafe glisse le long d'une face du tenon opposée à celle comportant l'épaulement, jusqu'à ce que le bossage coopère automatiquement avec l'épaulement du tenon sous l'effet de l'élasticité de la patte latérale, le tenon étant alors pris entre la patte latérale et la paroi longitudinale de l'agrafe.
- La face du tenon, au niveau de son extrémité libre, présente une forme de rampe.
- Une extrémité libre de la patte latérale présente la forme d'une rampe.
- L'agrafe comporte en outre une languette latérale qui s'étend depuis la paroi longitudinale selon un plan sensiblement parallèle à un plan longitudinal de l'enjoliveur et selon une direction opposée à la paroi interne de l'enjoliveur, ladite languette étant apte à prendre appui sur un élément d'étanchéité porté par l'enjoliveur de maniére à assurer le maintien de l'agrafe sur le tenon et de l'élément d'étanchéité sur l'enjoliveur.
- Lors du montage de l'enjoliveur sur l'élément de carrosserie, la patte d'extrémité de l'agrafe fléchit et glisse le long du bord de retenue de l'orifice de l'élément de carrosserie jusqu'à ce que le bord de retenue soit automatiquement reçu dans une encoche de la patte d'extrémité sous l'effet de l'élasticité de ladite patte d'extrémité.
- La patte d'extrémité présente la forme d'une rampe.
- L'agrafe et le tenon sont conformés de manière que l'effort de clippage de l'agrafe sur l'élément de carrosserie soit inférieur à l'effort de déclippage de l'agrafe de l'élément et de manière que, lors du démontage de l'enjoliveur, l'agrafe restant en place sur l'élément de carrosserie, l'enjoliveur et l'agrafe se désolidarisent.

D'autres caractéristiques et avantages de l'invention apparaîtront à la lecture de la description d'exemples de réalisation d'un agencement pour le montage d'un enjoliveur sur un pièce de carrosserie de véhicule automobile en référence aux dessins annexés dans lesquels :
- La figure 1 est une vue générale en perspective et on éclaté de l'agencement selon l'invention,
- La figure 2 est une vue en perspective d'un détail de l'agencement de la figura 1.
- La figure 3 est une vue en perspective selon un autre angle du détail de la figure 2.
- La figure 4 est une vue selon une coupe transversale de l'agencement en position montée.
- La figure 5 est une vue selon une coupe longitudinale de l'agencement en position montée,

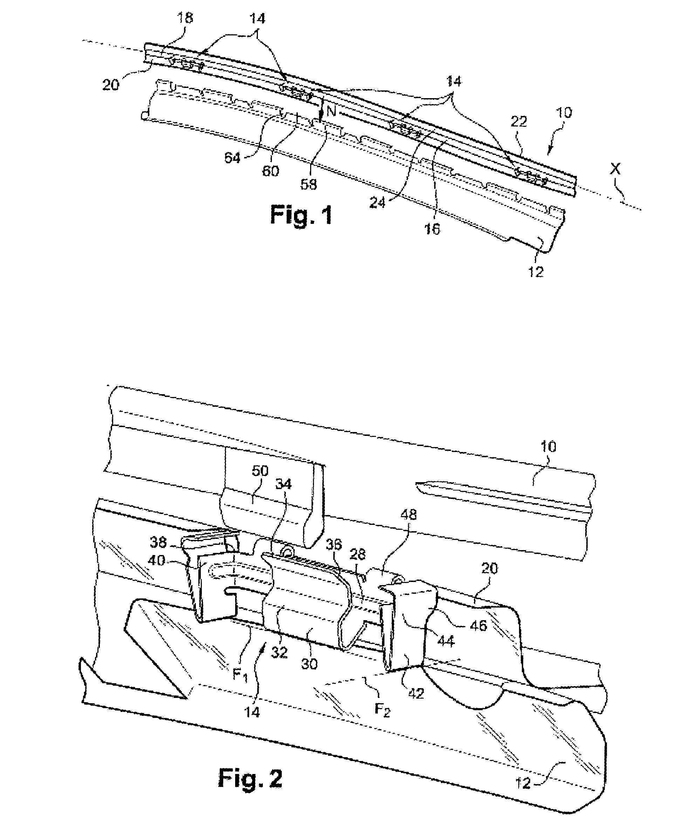

Dans la description qui suit, nous prendrons à titre non limitatif une orientation longitudinale, verticale et transversale indiquée par le trièdre L.V,T des figures 1 à 5.

Tel que représenté à la figure 1, un enjoliveur 10 d'axe longitudinal X et de plan longitudinal P est destiné à être monté sur un élément de carrosserie 12 d'un véhicule automobile. Il peut s'agir, par exemple, d'un enjoliveur de montant de baie se trouvant entre un panneau de carrosserie et un pare-brise.

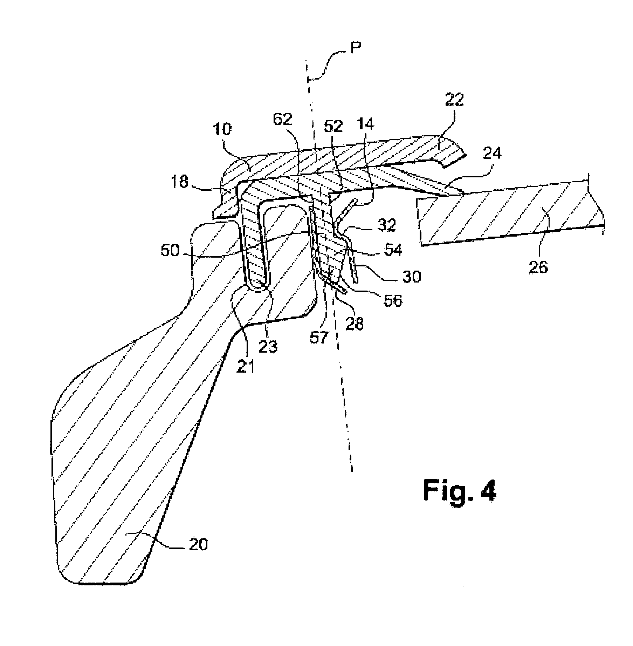

L'enjoliveur 10 est fixé sur la carrosserie au moyen d'au moins une agrafe 14 agencée entre une paroi interne 16 de l'enjoliveur 10 et l'élément de carrosserie 12, Dans le cas présent, l'agencement comporte quatre agrafes 14 d'orientation globalement longitudinale réparties régulièrement sur la longueur de l'enjoliveur 10 de façon à permettre un montage homogène de la pièce. Un bord longitudinal 18 de l'enjoliveur 10 est muni d'un élément d'étanchiéité 20 qui peut être agencé, par exemple, comme représenté à la figure 4, par l'intermédiaire d'une rainure 21 coopérant avec une nervure 23 ménagée sur la paroi interne 16 de l'enjoliveur 10. L'autre bord longitudinal 22 de l'enjoliveur 10 comporte une lèvre 24 destinée à coopérer avec une vitre 26 de pare-brise.

Tel que représenté à la figure 2, l'agrafe 14 présente une symétrie générale par rapport à un plan transversal. L'agrafe 14 présente une paroi longitudinale 28 depuis laquelle s'étend, sensiblement en direction de la paroi interne 16 de l'enjoliveur 10, une patte latérale élastique 30 apte à fléchir autour d'un axe de flexion F1 parallèle à l'axe longitudinal X et perpendiculaire à la normale N au plan de la paroi interne 16 de l'enjoliveur 10. La patte latérale 30 présente aussi un bossage longitudinal 32. Une extrémité libre 34 de la patte latérale 30 peut aussi présenter la forme d'une rampe 36.

La paroi longitudinale 28 de l'agrafe 14 présente, à chacune de ses extrémités 38, un retour 40 depuis lequel s'étend une patte élastique 42 dite d'extrémité apte à fléchir autour d'un axe de flexion F2 perpendiculaire à l'axe longitudinal X et à la normale N au plan de la paroi interne 16 de l'enjoliveur 10. La patte d'extrémité 42 comporte une encoche 44 et peut aussi présenter une rampe 46.

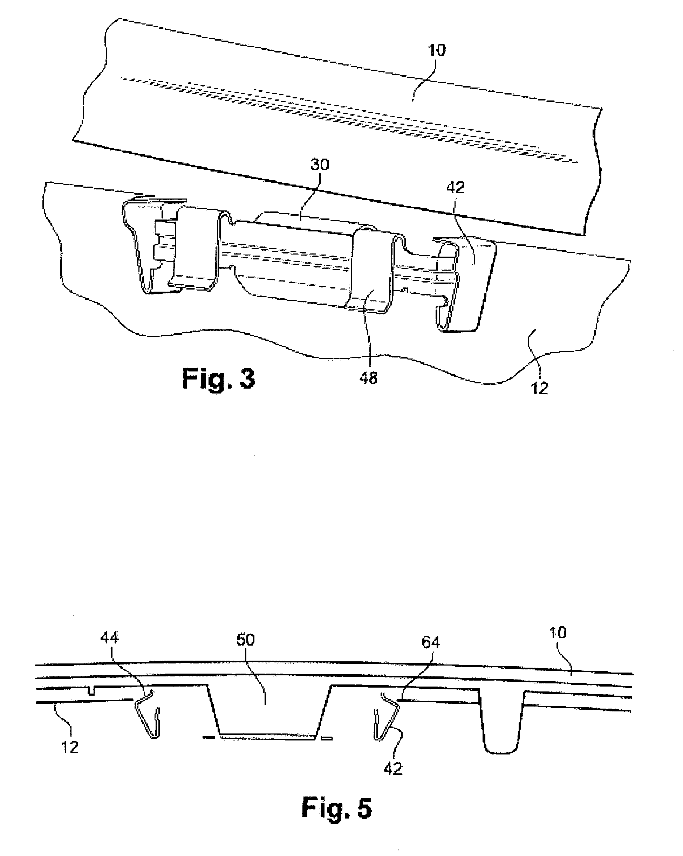

Tel que représenté à la figure 3, la paroi longitudinale 28 peut aussi comporter au moins une languette latérale 48 d'orientation globalement parallèle au plan longitudinal P s'étendant selon une direction opposée à la paroi interne 16 de l'enjoliveur 10.

Tel que représenté à la figure 4, la paroi interne 16 de l'enjoliveur 10 comporte un tenon 50 d'orientation sensiblement longitudinale dont une face 52 est munie d'un épaulement longitudinal 54 et peut aussi être muni d'une rampe 56 au niveau de son extrémité libre 57.

L'élément de carrosserie 12 présente un rebord 58 comportant un orifice 60 se trouvant en regard de l'agrafe 14. L'orifice 60 peut consister, comme dans le cas présent en une encoche ménagée dans le rebord 58 de l'élément de carrosserie 12.

Tel que représenté aux figures 4 et 5, l'agrafe 14 est montée sur l'enjoliveur 1 0 par un glissement simuitané du bossage 32 de la patte latérale 30 de l'agrafe 14 le long de la face 52 du tenon 50 et de la paroi longitudinale 28 de l'agrafe 14 le long d'une face 62 du tenon 50 opposée à la face 52, ce qui provoque le fléchissement de la patte latérale 30 autour de son axe de flexion F1, jusqu'à ce que le bossage 32 de la patte latérale 30 coopère automatiquement avec l'épaulement 54 du tenon 50 sous l'effet de l'élasticité de la patte latérale 30.

Lorsque l'agrafe 14 est en position montée., le tenon 50 est pris entre la paroi longitudinale 28 et la patte latérale 30 de l'agrafe 14. La languette latérale 48 est alors en appui sur l'élément d'étanchéité 20, ce qui permet d'améliorer le maintien de l'agrafe 14 sur le tenon 50 mais aussi le maintien de l'élément d'étanchéité 20 sur l'enjoliveur 10. La languette 48 permet aussi de réduire les dispersions transversales.

Pour le montage de l'enjoliveur 10 sur l'élément de carrosserie, la patte d'extrémité 42 glisse le long d'un bord de retenue 64 de l'orifice 60 en fléchissant autour de son axe de flexion F2 jusqu'à ce que, sous l'effet de l'élasticité de la patte d'extrémité 42, le bord de retenue 64 soit reçu dans l'encoche 44 de la patte d'extrémité 42.

Ainsi, lors du processus de montage, l'opérateur fixe l'enjoliveur 10 en clippant d'abord l'agrafe 14 sur l'enjoliveur 10 puis en agrafant directement l'enjoliveur 10 sur l'élément de carrosserie 12.

Ainsi la pièce 10 est bien maintenue sur l'élément de carrosserie 12, car en tirant sur l'enjoliveur 10, les bords de retenue 64 restent bloqués dans les encoches 44 des pattes d'extrémité 42 de l'agrafe 14.

Pour retirer l'enjoliveur 10 après montage, le démontage s'effectue entre l'enjoliveur 10 et l'agrale 14. En raison de la forme de l'encoche 44 de la patte d'extrémité 42 de l'agrafe 14 et de celle de l'épaulement 54 du tenon 50, l'effort nécessaire pour détacher l'enjoliveur 10 de l'agrafe 14 est moins important que celui nécessaire pour retirer l'agrafe 14 de l'élément de carrosserie 12. Ainsi l'optimisation des pentes des rampes 36, 56, de l'encoche 44 et de l'épaulement 54 permet de dimensionner les différents efforts de montage et de démontage.

## Revendications

1. Agencement pour le montage d'un enjoliveur (10) sur un élément de carrosserie (12) de véhicule automobile au moyen d'au moins une agrafe (14), **caractérisé en ce que** l'agrafe (14) comporte une patte latérale élastique (30) s'étendant depuis une paroi longitudinale (28) de l'agrafe (14) en direction d'une paroi interne (16) de l'enjoliveur (10), ladite patte latérale (30) pouvant fléchir autour d'un axe de flexion (F1) parallèle à un axe longitudinal (X) de l'enjoliveur (10) et perpendiculaire à la normale (N) au plan de la paroi interne (16) de l'enjoliveur (10) et présentent un bossage (32) de façon que la patte latérale (30) soit apte à coopérer avec un épaulement (54) d'un tenon (50) de la paroi interne (16) de l'enjoliveur (10) et **en ce que** l'agrafe (14) comporte, à chacune de ses extrémités (38), une patte élastique d'extrémité (42) pouvant fléchir autour d'un axe de flexion (F2) perpendiculaire à l'axe longitudinal (X) et à la normale (N) à la paroi interne (16) de l'enjoliveur (10), de manière que la patte d'extrémité (42) soit apte à coopérer avec un bord de retenue (64) d'un orifice (60) de l'élément de carrosserie (12).

2. Agencement pour le montage d'un enjoliveur (10) selon la revendication 1, **caractérisé en ce que**, lors du montage de l'agrafe (14) sur l'enjoliveur (10), la patte latérale (30) fléchit et le bossage (32) de la patte latérale (30) glisse le long de la face (52) du tenon (50) tandis que la paroi longitudinale (28) de l'agrafe (14) glisse le long d'une face (62) du tenon (50) opposée à celle comportant l'épaulement (52), jusqu'à ce que le bossage (32) coopère automatiquement avec l'épaulement (52) du tenon (50) sous l'effet de élasticité de la patte latérale (30), le tenon (50) étant alors pris entre la patte latérale (30) et la paroi longitudinale (28) de l'agrafe (14).

3. Agencement pour le montage d'un enjoliveur (10) selon la revendication précédente, **caractérisé en ce que** la face (52) du tenon (50), au niveau de son extrémité libre (57), présente une forme de rampe (56).

4. Agencement pour le montage d'un enjoliveur (10) selon l'une quelconque des revendications précédentes, **caractérisé en ce qu'**une extrémité libre (34) de la patte latérale (30) présente la forme d'une rampe (36).

5. Agencement pour le montage d'un enjoliveur (10) selon l'une quelconque des revendications 2 ou 3, **caractérisé en ce que** l'agrafe (14) comporte en outre une languette latérale (48) qui s'étend depuis la paroi longitudinale (28) selon un plan sensiblement parallèle à un plan longitudinal (P) de l'enjoliveur (10) et Selon une direction opposée à la paroi interne (16) de l'enjoliveur (10), ladite languette (48) étant apte à prendre appui sur un élément d'étanchéité (20) porté par l'enjoliveur (10) de manière à assurer le maintien de l'agrafe (14) sur le tenon (50) et de l'élément d'étanchéité (20) sur l'enjoliveur (10).

6. Agencement pour le montage d'un enjoliveur (10) selon l'une quelconque des revendications précédentes, **caractérisé en ce que**, lors du montage de l'enjoliveur (10) sur l'élément de carrosserie (12), la patte d'extrémité (42) de l'agrafé (14) fléchit et glisse le long du bord de retenue (34) de l'orifice (60) de l'élément de carrosserie (12) jusqu'à ce que le bord de retenue (34) soit automatiquement reçu dans une encoche (44) de la patte d'extrémité (42) sous l'effet de l'élasticité de ladite patte d'extrémité (42).

7. Agencement pour le montage d'un enjoliveur (10) selon la revendication précédente, **caractérisé en ce que** la patte d'extrémité (42) présente la forme d'une rampe (46).

8. Agencement pour le montage d'un enjoliveur (10) selon l'une quelconque des revendications précédentes, **caractérisé en ce que** l'agrafe (14) et le tenon (50) sont conformés de manière que l'effort de clippage de l'agrafe (14) sur l'élément de carrosserie (12) soit inférieur à l'effort de déclippage de l'agrafe (14) de l'élément (12) et de manière que, lors du démontage de l'enjoliveur (10), l'agrafe (14) restant en place sur l'élément de carrosserie (12), l'enjoliveur (10) et l'agrafe (14) se désolidarisant.

## Claims

1. Arrangement for mounting a decorative item (10) on a motor vehicle bodywork element (12), by means of at least one clip (14), **characterized in that** the clip (14) comprises an elastic lateral tab (30) extending from one longitudinal wall (28) of the clip (14) towards an internal wall (16) of the decorative element (10), it being possible for the said lateral tab (30) to bend about a bend axis (F1) parallel to a longitudinal axis (X) of the decorative element (10) and perpendicular to the normal (N) to the plane of the internal wall (16) of the decorative element (10) and having a boss (32) such that the lateral tab (30) is able to collaborate with a shoulder (54) of a tenon (50) of the internal wall (16) of the decorative element (10), and **in that** the clip (14) comprises, at each of its ends (38), an elastic end tab (42) that can bend about a bend axis (F2) perpendicular to the longitudinal axis (X) and to the normal (N) to the internal wall (16) of the decorative element (10) so that the end tab (42) is able to collaborate with a retaining edge (64) of a hole (60) in the bodywork element (12).

2. Arrangement for mounting a decorative element (10) according to Claim 1, **characterized in that**, when mounting the clip (14) on the decorative element (10), the lateral tab (30) bends and the boss (32) of the lateral tab (30) slides along the face (52) of the tenon (50) while the longitudinal wall (28) of the clip (14) slides along an opposite face (62) of the tenon (50) to the one that has the shoulder (52) until the boss (32) automatically collaborates with the shoulder (52) of the tenon (50) under the effect of the elasticity of the lateral tab (30), the tenon (50) then being engaged between the lateral tab (30) and the longitudinal wall (28) of the clip (14).

3. Arrangement for mounting a decorative element (10) according to the preceding claim, **characterized in that** the face (52) of the tenon (50), in the region of its free end (57), has a ramped shape (56).

4. Arrangement for mounting a decorative element (10) according to any one of the preceding claims, **characterized in that** a free end (34) of the lateral tab (30) has the form of a ramp (36).

5. Arrangement for mounting a decorative element (10) according to either one of Claims 2 and 3, **characterized in that** the clip (14) further comprises a lateral tongue (48) which extends from the longitudinal wall (28) in a plane substantially parallel to a longitudinal plane (P) of the decorative element (10) and in an opposite direction to the internal wall (16) of the decorative element (10), the said tongue (48) being able to press against a sealing element (20) carried by the decorative element (10) in such a way as to ensure that the clip (14) is retained on the tenon (50) and the sealing element (20) is retained on the decorative element (10).

6. Arrangement for mounting a decorative element (10) according to any one of the preceding claims, **characterized in that**, when the decorative element (10) is being mounted on the bodywork element (12), the end tab (42) of the clip (14) bends and slides along the retaining edge (34) of the hole (60) in the bodywork element (12) until the retaining edge (34) is automatically housed in a cutout (44) in the end tab (42) under the effect of the elasticity of the said end tab (42).

7. Arrangement for mounting a decorative element (10) according to the preceding claim, **characterized in that** the end tab (42) has a ramped shape (46).

8. Arrangement for mounting a decorative element (10) according to any one of the preceding claims, **characterized in that** the clip (14) and the tenon (50) are shaped in such a way that the force involved in clipping the clip (14) onto the bodywork element (12) is lower than the force involved in unclipping the clip (14) from the element (12) and in such a way that, when the decorative element (10) is being removed, with the clip (14) remaining in position on the bodywork element (12), the decorative element (10) and the clip (14) become detached from one another.

## Patentansprüche

1. Anordnung zur Montage einer Zierleiste (10) auf ein Kraftfahrzeug-Karosserieelement (12) mittels mindestens einer Klammer (14), **dadurch gekennzeichnet, dass** die Klammer (14) eine elastische seitliche Lasche (30) aufweist, die sich von einer Längswand (28) der Klammer (14) in Richtung einer Innenwand (16) der Zierleiste (10) erstreckt, wobei die seitliche Lasche (30) sich um eine Biegeachse (F1) parallel zu einer Längsachse (X) der Zierleiste (10) und lotrecht zur Normalen (N) zur Ebene der Innenwand (16) der Zierleiste (10) biegen kann und eine Wölbung (32) aufweist, damit die seitliche Lasche (30) mit einer Schulter (54) eines Zapfens (50) der Innenwand (16) der Zierleiste (10) zusammenwirken kann, und dass die Klammer (14) an jedem ihrer Enden (38) eine elastische Endlasche (42) aufweist, die sich um eine Biegeachse (F2) lotrecht zur Längsachse (X) und zur Normalen (N) zur Innenwand (16) der Zierleiste (10) biegen kann, damit die Endlasche (42) mit einem Halterand (64) einer Öffnung (60) des Karosserieelements (12) zusammenwirken kann.

2. Anordnung zur Montage einer Zierleiste (10) nach Anspruch 1, **dadurch gekennzeichnet, dass** bei der Montage der Klammer (14) auf die Zierleiste (10) die seitliche Lasche (30) sich biegt und die Wölbung (32) der seitlichen Lasche (30) entlang der Seite (52) des Zapfens (50) gleitet, während die Längswand (28) der Klammer (14) entlang einer Seite (62) des Zapfens (50) entgegengesetzt zu derjenigen (52) gleitet, die die Schulter aufweist, bis die Wölbung (32) unter der Wirkung der Elastizität der seitlichen Lasche (30) automatisch mit der Schulter (52) des Zapfens (50) zusammenwirkt, wobei der Zapfen (50) dann zwischen der seitlichen Lasche (30) und der Längswand (28) der Klammer (14) gehalten wird.

3. Anordnung zur Montage einer Zierleiste (10) nach dem vorhergehenden Anspruch, **dadurch gekennzeichnet, dass** die Seite (52) des Zapfens (50) in Höhe ihres freien Endes (57) die Form einer Rampe (56) aufweist.

4. Anordnung zur Montage einer Zierleiste (10) nach einem der vorhergehenden Ansprüche, **dadurch gekennzeichnet, dass** ein freies Ende (34) der seitlichen Lasche (30) die Form einer Rampe (36) aufweist.

5. Anordnung zur Montage einer Zierleiste (10) nach einem der Ansprüche 2 oder 3, **dadurch gekennzeichnet, dass** die Klammer (14) außerdem eine seitliche Zunge (48) aufweist, die sich von der Längswand (28) gemäß einer Ebene im Wesentlichen parallel zu einer Längsebene (P) der Zierleiste (10) und in einer Richtung entgegengesetzt zur Innenwand (16) der Zierleiste (10) erstreckt, wobei die Zunge (48) auf einem von der Zierleiste (10) getragenen Dichtungselement (20) aufliegen kann, um den Halt der Klammer (14) auf dem Zapfen (50) und des Dichtungselements (20) auf der Zierleiste (10) zu gewährleisten.

6. Anordnung zur Montage einer Zierleiste (10) nach einem der vorhergehenden Ansprüche, **dadurch gekennzeichnet, dass** bei der Montage der Zierleiste (10) auf das Karosserieelement (12) die Endlasche (42) der Klammer (14) sich biegt und entlang des Halterands (34) der Öffnung (60) des Karosserieelements (12) gleitet, bis der Halterand (34) unter der Wirkung der Elastizität der Endlasche (42) automatisch in einer Nut (44) der Endlasche (42) aufgenommen wird.

7. Anordnung zur Montage einer Zierleiste (10) nach dem vorhergehenden Anspruch, **dadurch gekennzeichnet, dass** die Endlasche (42) die Form einer Rampe (46) hat.

8. Anordnung zur Montage einer Zierleiste (10) nach einem der vorhergehenden Ansprüche, **dadurch gekennzeichnet, dass** die Klammer (14) und der Zapfen (50) so gestaltet sind, dass die Einklinkkraft der Klammer (14) auf dem Karosserieelement (12) geringer als die Ausklinkkraft der Klammer (14) vom Element (12) ist, und dass beim Ausbau der Zierleiste (10), bei dem die Klammer (14) auf dem Karosserieelement (12) angeordnet bleibt, die Zierleiste (10) und die Klammer (14) sich voneinander lösen.
